# EUROPÄISCHE PATENTANMELDUNG

(11) **EP 4 570 472 A1**
(43) Veröffentlichungstag der Anmeldung: **18.06.2025**
(21) Anmeldenummer: 24219132.8
(22) Anmeldetag: 11.12.2024
(51) Int. Cl.: B29C 49/42, B29C 49/78, B29C 49/64

(54) **VORRICHTUNG UND VERFAHREN ZUR HERSTELLUNG EINES BEHÄLTERKÖRPERS AUS EINEM VORFORMLING SOWIE VERFAHREN ZUR AUSLEGUNG EINER SOLCHEN VORRICHTUNG**

(30) Priorität: 12.12.2023 DE 102023134763
(71) Anmelder: KHS GmbH, 44143 Dortmund (DE)
(72) Erfinder: Langhammer, Philipp, 44143 Dortmund (DE); Herbort, Michael, 44143 Dortmund (DE)
(74) Vertreter: Andrejewski - Honke Patent- und Rechtsanwälte Partnerschaft mbB

(57) **Zusammenfassung**

Die Erfindung betrifft eine Vorrichtung (1) und ein Verfahren zu der Herstellung eines Behälterkörpers aus einem Vorformling, welcher einen durch eine Wandung umschlossenen und über eine Handhabungsöffnung zugänglichen Innenraum aufweist. Die Vorrichtung (1) weist eine Umformmaschine (2) auf, welche dazu eingerichtet ist, den Vorformling zu erwärmen und bei einer vorbestimmten Umformtemperatur (T_{b}) von bevorzugt zumindest 120 °C, insbesondere zwischen 160 °C und 180 °C, zu einem Behälterkörper umzuformen und einen Ausgabebereich (2d) für den umgeformten Behälterkörper aufweist. Der Ausgabebereich (2d) schließt unmittelbar an eine Transportvorrichtung (4) an, welche zur Übernahme des Behälterkörpers und dessen Weitertransport eingerichtet ist. Die Transportvorrichtung (4) ist unmittelbar an einen Eingabebereich (5a) einer Weiterverarbeitungsanlage (5) angeschlossen. Erfindungsgemäß weist die Transportvorrichtung (4) eine Anzahl zwischen zwei und acht von mechanischen Handhabungseinheiten (4a, 4b, 4c), insbesondere Transportsternen auf.

## Beschreibung

Die Erfindung betrifft eine Vorrichtung und ein Verfahren zur Herstellung eines Behälterkörpers aus einem Vorformling, welcher einen durch eine Wandung umschlossenen und über eine Handhabungsöffnung zugänglichen Innenraum aufweist. Die Vorrichtung umfasst eine Umformmaschine, welche dazu eingerichtet ist den Vorformling zu erwärmen und bei einer vorbestimmten Umformtemperatur, vorzugsweise von zumindest 120 °C, insbesondere zwischen 160 °C und 180 °C, zu einem Behälterkörper umzuformen und ein Ausgabebereich für den umgeformten Behälterkörpers aufweist. Der Ausgabebereich ist unmittelbar an eine Transportvorrichtung angeschlossen, welche zur Übernahme des Behälterkörpers und dessen Weitertransport eingerichtet ist. Gegenstand der Erfindung ist auch ein Verfahren zur Herstellung eines Behälterkörpers sowie ein Verfahren zur Auslegung einer solchen Vorrichtung.

Gattungsgemäße Vorrichtungen werden dazu eingesetzt, um einen Behälterkörper herzustellen und anschließend in einer Weiterverarbeitungsanlage zusätzlich zu bearbeiten und/oder zu veredeln. Der Vorformling ist vorzugsweise aus einem Kunststoffmaterial, insbesondere Polyethylenterephthalat (PET) gebildet. Dieses erhält infolge einer Umformung in dem vorgesehenen Temperaturbereich von über 120 °C, insbesondere zwischen 160 °C und 180 °C eine besonders vorteilhafte kristalline Materialstruktur und gute Beständigkeit beim Befüllen mit einem erwärmten Füllgut. Das entsprechende gattungsgemäße Herstellungsverfahren bzw. die danach hergestellten Behälterkörper werden in der Fachsprache auch als "Hotfill" bezeichnet.

Sowohl das Umformverfahren als auch nachfolgende Bearbeitungsschritten in einer Weiterverarbeitungsanlage sind in der Regel hochgradig temperatursensitiv. Wird bei diesem nicht ein vorgegebener Zieltemperaturbereich eingehalten, sind nicht optimale Arbeitsergebnisse die Folge. Dies kann neben fehlerhaften und daher zu verwerfenden Behälterkörpern sogar die gänzliche Beschädigung oder Zerstörung der Vorformlinge, Behälterkörper oder ganzer Anlagenteile zur Folge haben. Da zwischen unterschiedlichen Produktionsschritten - insbesondere zwischen der Umformmaschine und einer Weiterverarbeitungsanlage oftmals Staustrecken und/oder Luftförderanlagen eingesetzt werden, haben diese einen unkontrollierten Temperaturverlust zur Folge. Um eine sichere Temperaturführung in den nachfolgenden Weiterverarbeitungsanlagen zu gewährleisten, sind daher aufwendige Kühl- und/oder Heizvorrichtungen erforderlich. Diese sind mit einem gesteigerten Platz-, Material- und Energiebedarf verbunden.

Andererseits haben sowohl der Umformprozess als auch nachfolgende Weiterverarbeitungsprozesse - wie beispielsweise Beschichtungsverfahren - oftmals einen zusätzlichen Wärmeeintrag zur Folge. Das unmittelbare Verbinden des Ausgabebereichs der Umformmaschine mit dem Eingabebereich der Weiterverarbeitungsanlage - d. h. das sogenannte Verblocken - ist daher ebenfalls keine Option. In diesem Fall würden die Behälterkörper mit einer zu hohen Temperatur in den Eingabebereich der Weiterverarbeitungsanlage gelangen.

Vor diesem Hintergrund liegt der Erfindung die Aufgabe zugrunde, die zuvor beschriebenen Schwierigkeiten zu überwinden. Dabei soll insbesondere eine sichere und effiziente Temperaturführung der Behälterkörper gewährleistet werden. Gegenstand der Erfindung und Lösung dieser Aufgabe ist eine Vorrichtung nach Anspruch 1, ein Verfahren nach Anspruch 8 sowie ein Auslegungsverfahren nach Anspruch 12. Bevorzugte Ausgestaltungen sind jeweils in den abhängigen Unteransprüchen angegeben.

Ausgehend von der gattungsgemäßen Vorrichtung weist die Transportvorrichtung erfindungsgemäß eine Anzahl zwischen zwei und acht von mechanischen Handhabungseinheiten auf. Eine mechanische Handhabungseinheit meint im Sinne der Erfindung eine Transporteinheit, welche Behälterkörper einzelnen übernehmen und lokal fixieren kann. Dabei kann es sich insbesondere um einen Klemm- und/oder Greif-Vorgang handeln. Bei den Handhabungseinheiten kann es sich insbesondere um sogenannte Transportsterne handeln.

Ein Transportstern meint insbesondere eine Handhabungseinheit, welche an einem Umfang umlaufend eine Mehrzahl von Handhabungsstationen, bzw. Greifern aufweist. Diese können einen Behälterkörper - insbesondere an einer Handhabungsöffnung - übernehmen und durch eine Umlaufbewegung des Sterns entlang einer Kreisbahn bewegen.

Durch die Ausbildung einer Mehrzahl von Handhabungseinheiten und die darin vollzogene deterministische Transportbewegung des Behälterkörpers kann sein Bewegungsprofil innerhalb der Transportvorrichtung und damit auch seine Verweilzeit darin bei einer gegebenen Prozessgeschwindigkeit vorherbestimmt werden. Dadurch kann ein genau kalkulierbares thermisches Verhalten des Behälterkörpers während seines Durchlaufs durch die Transportvorrichtung erreicht werden. Infolgedessen kann mit einfachen Mitteln eine genaue Temperatursteuerung der in die Eingabebereich gelangenden Behälterkörper erzielt werden. Dabei ist der Temperaturverlust bei einer Anzahl zwischen zwei und acht mechanischen Handhabungseinheiten einerseits ausreichend groß und andererseits hinreichend genau kalkulierbar, dass eine zielgerichtete Temperaturführung für die Weiterverarbeitungsanlage ermöglicht wird.

Die Umformmaschine, die Transporteinheit und die Weiterverarbeitungsanlage sind besonders bevorzugt miteinander verblockt. Das bedeutet, dass sie unmittelbar aneinander angrenzend aufgestellt und angeschlossen sind, sodass sie mit derselben Prozessgeschwindigkeit Behälterkörper gleichlaufend gekoppelt verarbeiten (umformen, transportieren und weiterverarbeiten) können.

Bei dem Behälterkörpers kann es sich ohne Beschränkung der Erfindung beispielsweise um einen der Form nach fertigen Verpackungsbehälter handeln, welcher ohne zusätzliche Umformungsmaßmahmen anschließend verwendet werden kann. Ebenso ist es möglich, die erfindungsgemäße Vorrichtung bzw. die erfindungsgemäßen Verfahren für Behältervorstufen einzusetzen, welche durch eine nachfolgende zusätzliche Umformung - beispielsweise einen Beschnitt - ihre endgültige Gestalt erhalten.

Gemäß einer ersten bevorzugten Ausführungsform ist die Weiterverarbeitungsanlage eine Beschichtungsanlage, insbesondere eine Plasmabeschichtungsanlage. Diese ist dazu eingerichtet, auf den Behälterkörpern innenseitig und/oder außenseitig eine Beschichtung aufzubringen. Diese dient insbesondere der Verstärkung der Barriereeigenschaften des Behältermaterials. Dabei kann es sich beispielsweise um eine Sauerstoff-, Wasserdampf- und/oder Kohlendioxid-Barriere handeln.

Besonders bevorzugt handelt es sich bei der Beschichtungsanlage um eine Plasmabeschichtungsanlage. In dieser wird in einem plasmagestützten Abscheideprozess ein Beschichtungsmaterial - z. B. Siliziumdioxid - auf das Behältermaterial aufgebracht. Dieses weist besonders gute Barriereeigenschaften und eine große chemische Stabilität auf.

Beschichtungsanlagen bzw. Beschichtungsverfahren erzielen die größte Effektivität bzw. Beschichtungsqualität üblicherweise in einem vorgegebenen Temperaturfenster. Dieses unterstützt die Verbindung zwischen dem Beschichtungsmaterial und dem Behältermaterial. Auch können durch anschließende thermische Relaxationen die Barriereeigenschaften verbessert werden.

Die Erfindung ist jedoch nicht auf Beschichtungsanlagen als Weiterverarbeitung begrenzt. Gemäß einer weiteren bevorzugten Ausgestaltung handelt es sich bei der Weiterverarbeitungsanlage um eine Füllvorrichtung. Es gibt Füllvorrichtungen, bei denen der Befüllprozess im erwärmten Zustand des Füllguts erfolgt. Man spricht auch von Heiß-Abfüllung, vom sogenannten "hotfill". Trotz der Befüllung im erwärmten Zustand muss dabei zunächst eine gewisse Temperatur des Behälters unterschritten werden, damit der Behälterkörper eine für den Befüllprozess ausreichende mechanische Stabilität aufweist. Im Rahmen der vorliegenden Erfindung kann eine optimale Temperaturführung auch bei einem direkten Anschluss (Verblockung) der Füllvorrichtung an die Umformmaschine gewährleistet werden.

Gemäß einer weiteren bevorzugten Ausführungsform der Erfindung ist die Weiterverarbeitungsanlage eine Trimmeinheit. Darunter versteht man eine Maschine, mit der der Behälterkörper nach seiner Umformung zugeschnitten werden kann. Dadurch kann beispielsweise die Handhabungsöffnung vergrößert und/oder entgratet werden. Auch finden Trimmeinheiten Anwendungen in Prozessen, bei denen der durch Umformung hergestellte Behälterkörper noch nicht die final vorgesehene Gestalt des Behälters aufweist, sondern lediglich eine Behältervorstufe darstellt. Durch das Trimmen kann eine Behälteröffnung mit den gewünschten geometrischen Eigenschaften - Formgebung und Abmessung - hergestellt werden.

Vorzugsweise enthält die Trimmeinheit zumindest eine (mechanische) Klinge zum Durchtrennen des Behälterkörpers. Ein solcher Trimmprozess wird bei einem erwärmten Behälterkörper vereinfacht. Gleichzeitig darf dessen Temperatur nicht zu hoch sein, da andernfalls eine ungewollte plastische Verformung eintreten könnte. Infolgedessen ist die erfindungsgemäße Temperaturführung auch für den Einsatz bei einer Trimmeinheit vorteilhaft.

Gemäß einer besonders bevorzugten Ausgestaltung ist die Umformmaschine eine Streckblasmaschine. Diese setzt den Umformprozess durch ein mechanisches Auseinanderziehen des Vorformlings mittels einer Reckstange in Verbindung mit einer Druckerhöhung in dem Innenraum und einer Formgebung durch eine Außenform um. Insbesondere das mechanische Recken in Verbindung mit dem erfindungsgemäß beanspruchten Temperaturbereich führen bei geeigneten Kunststoffen, insbesondere PET, zu den vorteilhaften kristallinen Eigenschaften. Die Temperatur und Temperaturverteilung des Behälterkörpers ist durch den Streckblasprozess und die vorherige Aufheizung klar definiert. Durch die geeignet gewählte Anzahl an Handhabungseinheiten wird dann auch eine vorbestimmte Temperatur und Temperaturverteilung im Eingabebereich der Weiterverarbeitungseinheit erzielt.

Gemäß einer besonders bevorzugten Ausgestaltung ist im Bereich der Transportvorrichtung keine auf den Behälterkörper wirkende Heizvorrichtung ausgebildet. Material, Platz und Energie für eine derartige Heizvorrichtung können somit eingespart werden. Die korrekte Temperierung in dem Eingabebereich der Weiterverarbeitungsvorrichtung wird somit ausschließlich über die Restwärme des Umformprozesses in Verbindung mit einer kontrollierten Abkühlung infolge der erfindungsgemäßen Transportvorrichtung realisiert.

Optional weist die Transportvorrichtung zumindest eine aktive Kühlvorrichtung auf. Diese ist insbesondere dazu eingerichtet, nur einen Teilbereich des in der Transportvorrichtung geführten Behälterkörpers abzukühlen. Besonders bevorzugt handelt es sich hierbei um eine sogenannte Bodenkühlung. Diese dient dazu, einen - der Handhabungsöffnung gegenüberliegenden - Bodenbereich des Behälterkörpers abzukühlen. Besonders bevorzugt handelt es sich hierbei um eine sogenannte Schwallkühlung. Diese umfasst ein Kühlmedium, welches gegen die zu kühlende Fläche, insbesondere Bodenfläche, geleitet bzw. gesprüht wird. Das Kühlmedium kann insbesondere Wasser sein. Ebenso kann im Rahmen der Erfindung auch eine Luftdusche zur Kühlung eingesetzt werden.

Gegenstand der Erfindung ist auch ein Verfahren zur Herstellung eines Behälterkörpers aus einem Vorformling. Der Vorformling weist einen durch eine Wandung umschlossenen und über eine Handhabungsöffnung zugänglichen Innenraum auf. Insbesondere kann das erfindungsgemäße Verfahren in einer Vorrichtung gemäß zumindest einem Ausführungsbeispiel der zuvor beschriebenen erfindungsgemäßen Vorrichtung durchgeführt werden. Der Vorformling wird in einer Umformmaschine, insbesondere in einer Streckblasmaschine, erwärmt und bei einer vorbestimmten Umformtemperatur zu einem Behälterkörper umgeformt. Die Umformtemperatur beträgt vorzugsweise zumindest 120 °C, insbesondere zwischen 160 °C und 180 °C. Der Behälterkörper wird anschließend bei einer Ausgabetemperatur, vorzugsweise zumindest 65 °C, insbesondere zwischen 80 °C und 120 °C, aus einem Ausgabebereich der Umformmaschine übergeben.

Erfindungsgemäß wird der Behälterkörper von einer Reihe zwischen zwei und acht mechanischen Handhabungseinheiten, insbesondere Transportstern übernommen und unmittelbar an eine Weiterverarbeitungsanlage mit einer Zieltemperatur übergeben, welche geringer ist als die Ausgabetemperatur. Die Transportstrecke über die erfindungsgemäße Reihe der mechanischen Handhabungseinheiten einer Transportvorrichtung Transportvorrichtung wird folglich zur kontrollierten Abkühlung des Behälterkörpers genutzt. Diese Abkühlung erfolgt zumindest teilweise durch eine passive Wärmeabgabe an die Umgebung.

Besonders bevorzugt beträgt die Zieltemperatur weniger als 95 °C, insbesondere weniger als 90 °C. Unterhalb dieser Temperatur weist der Behälterkörper (aus einem Kunststoffmaterial) eine ausreichende mechanische Festigkeit auf, um einen Weiterverarbeitungsschritt, z. B. Beschichten, Füllen und/oder Trimmen, unterzogen zu werden. Zweckmäßigerweise beträgt die Zieltemperatur weniger als 60 °C.

Andererseits ist die Zieltemperatur vorzugsweise deutlich gegenüber der Umgebungstemperatur (20 °C bis 30 °C) erhöht. Um die vorteilhaften Effekte der Restwärme aus dem Umformprozess nutzen zu können, beträgt die Zieltemperatur zumindest 40 °C, ganz besonders bevorzugt zumindest 50 °C. Besonders gute Beschichtungsergebnisse werden bevorzugt bei einer Temperatur von zumindest 60 °C erreicht.

Gegenstand der Erfindung ist auch ein Verfahren zum Auslegen einer Vorrichtung zur Herstellung eines Behälterkörpers aus einem Vorformling. Bei dieser Vorrichtung kann es sich insbesondere um eine zuvor beschriebene erfindungsgemäße Vorrichtung handeln, welche Behälterkörper nach dem zuvor beschriebenen Verfahren herstellen kann.

Zum Grundaufbau der auszulegenden Vorrichtung zählt eine Umformmaschine, insbesondere eine Streckblasmaschine, welche dazu eingerichtet ist einen Vorformling zu erwärmen und bei einer vorbestimmten Umformtemperatur von vorzugsweise zumindest 120 °C, insbesondere zwischen 160 °C und 180 °C, zu einem Behälterkörper umzuformen und einem Ausgabebereich für den umgeformten Behälterkörper mit einer Ausgabetemperatur aufweist. Aufgrund des Wärmeverlustes beim Umformprozess ist die Ausgabetemperatur im Allgemeinen geringer als die Umformtemperatur und liegt vorzugsweise bei zumindest 65 °C, insbesondere zwischen 80 °C und 120 °C. Der Ausgabebereich ist unmittelbar an eine Transportvorrichtung angeschlossen, welche zur Übernahme des Behälterkörpers (bei der Ausgabetemperatur) und dessen Weitertransport eingerichtet ist. Ferner ist die Transportvorrichtung unmittelbar an einen Eingabebereich einer Weiterverarbeitungsanlage angeschlossen.

Erfindungsgemäß ist vorgesehen, dass die Transportvorrichtung eine Anzahl von mechanischen Handhabungseinheiten, insbesondere Transportsternen aufweist. Die Anzahl der Handhabungseinheiten wird im Rahmen des erfindungsgemäßen Auslegungsverfahrens anhand der Differenz zwischen der Ausgabetemperatur und einer vorgesehenen Zieltemperatur an der Weiterverarbeitungsanlage bestimmt.

Die Anzahl wird dabei so gewählt, dass insbesondere aufgrund von passiven Abkühlungsprozessen die Temperatur des umgeformten Behälterkörpers beim Durchlaufen der Transportvorrichtung von der Ausgabetemperatur auf einen Wert innerhalb eines Zielbereichs, insbesondere auf eine vorgesehene Zieltemperatur absinkt. Diese Betrachtung wird insbesondere bei einer Nenngeschwindigkeit der Vorrichtung betrachtet, für die sie ausgelegt wird. Diese beträgt vorzugsweise zwischen 20.000 und 100.000 Behältern pro Stunde, besonders bevorzugt zwischen 60.000 und 80.000 Behältern pro Stunde.

Gemäß einer bevorzugten Variante des Verfahrens wird die Anzahl der Handhabungseinheiten anhand eines exponentiellen Temperaturverlustes modelliert. Da der Wärmeverlust immer auch von der Temperaturdifferenz zwischen dem Behälterkörper und seiner Umgebung abhängt, ist bei einer höheren Behältertemperatur von einem größeren Temperaturverlust auszugehen als bei einem kälteren. Infolgedessen ist der Wärmeverlust an der ersten Handhabungseinheit größer als an den nachfolgenden. Dieser Verlauf kann durch eine exponentiellen Temperaturverlauf bzw. einen exponentiell abfallenden Temperaturverlust pro Handhabungseinheit angenähert werden.

Alternativ kann die Anzahl der Handhabungseinheiten anhand eines konstanten Temperaturverlusts pro Handhabungseinheit abgeschätzt werden. Die Anzahl der vorzusehenden Handhabungseinheiten ergibt sich dabei durch die Differenz zwischen der Ausgabetemperatur und der Zieltemperatur (Temperaturabfall) geteilt durch den (konstant angenommenen) Temperaturverlust pro Handhabungseinheit. Der so ermittelte Wert ist entsprechend zu Runden, dass die Zieltemperatur bzw. der Zieltemperaturbereich sicher erreicht wird. Vorzugsweise ist die nach dem vorstehend beschriebenen Verfahren ermittelte Anzahl auf die nächste ganze Zahl aufzurunden, um eine obere Schranke für die Zieltemperatur bzw. des Zieltemperaturbereichs auch sicher zu unterschreiten. Hierdurch kann auch eine Abweichung von dem realen Temperaturverlust ausgeglichen werden.

Besonders bevorzugt wird der konstante Temperaturverluste pro Handhabungseinheit mit einem Wert zwischen 2 K und 5 K angenommen. Um beispielsweise einen Temperaturabfall von ca. 15 K zu erreichen, sind zwischen drei und acht Handhabungseinheiten erforderlich.

Die Erfindung wird nachfolgend anhand von lediglich ein Ausführungsbeispiel darstellenden Figuren erläutert. Es zeigen dabei schematisch:
- Fig. 1: eine schematische Draufsicht einer erfindungsgemäßen Vorrichtung und
- Fig. 2: einen exemplarischen Temperaturverlauf im Rahmen des erfindungsgemäßen Verfahrens.

Die Erfindung betrifft eine Vorrichtung 1 zur Herstellung von Behältern aus Vorformlingen. Die zugrundeliegenden Vorformlinge weisen eine durch eine Wandung umschlossenen Innenraum auf, welcher durch eine Handhabungsöffnung zugänglich ist. Die Handhabungsöffnung ist mit einem profilierten Rand ausgebildet, an dem die Vorformlinge mit Greifwerkzeugen - insbesondere von Handhabungseinheiten wie Transportsternen - in der Vorrichtung 1 geführt werden.

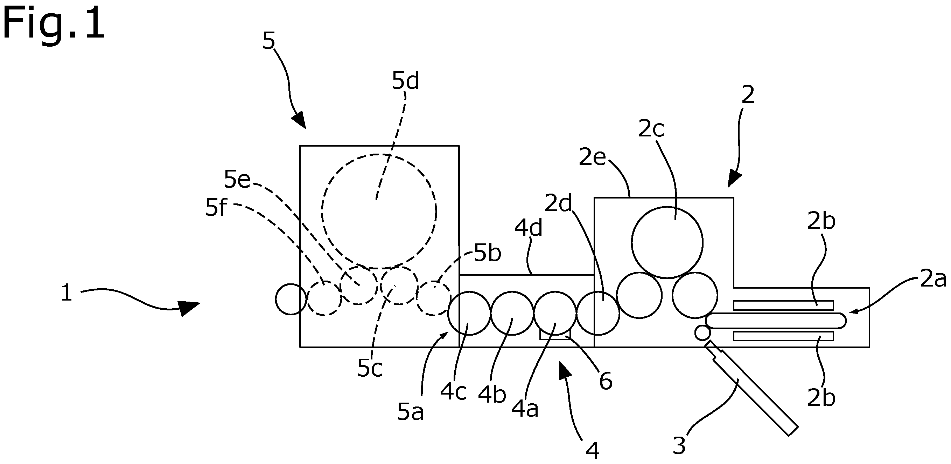

Die in Fig. 1 dargestellte Vorrichtung 1 weist eine Umformmaschine 2 auf, welche als Streckblasmachine ausgebildet ist. Die Umformmaschine 2 in diesem Ausführungsbeispiel ist dazu eingerichtet, einen Vorformling von einer Vorformlingzuführung 3 zu übernehmen und in einem Heiztunnel 2a mit Heizelementen 2b auf eine Umformtemperatur T_{b} zwischen 160 °C und 180 °C zu erwärmen. Die erwärmten Vorformlinge werden anschließend in Blasstationen eines Blasrades 2c zu einem Behälterkörper umgeformt. Ein Ausgaberad bildet einen Ausgabebereich 2d der Umformmaschine, mit dem der umgeformte Behälterkörpers aus einer Einhausung 2e der Umformmaschine 2 befördert wird. Dabei weist der umgeformte Behälterkörper eine Ausgabetemperatur T_{c} von vorzugsweise zwischen 80 °C und 120 °C auf.

Der Ausgabebereich 2d ist unmittelbar an eine Transportvorrichtung 4 angeschlossen, welche zur Übernahme des Behälterkörpers und dessen Weitertransport eingerichtet ist. Die Transportvorrichtung 4 ist ihrerseits unmittelbar mit dem Eingabebereich 5a einer Weiterverarbeitungsanlage 5 verbunden.

In dem dargestellten Ausführungsbeispiel handelt es sich bei der Weiterverarbeitungsanlage 5 um eine Plasmabeschichtungsanlage, in der der Behälterkörper bei einer Zieltemperatur Tz in einem optimalen Temperaturbereich zwischen einer unteren Grenze Tᵤ 60 °C und und einer oberen Grenze Tₒ 80 °C von der Transfereinheit 4 übernommen wird. Über ein erstes Wenderad 10b wird der Behälterkörper so positioniert, dass dessen Handhabungsöffnung nach unten zeigt. Anschließend werden mehrere Behälterkörper in einer Gruppierstation 5c gesammelt und in Gruppen von je vier Behälterkörpern an ein Beschichtungsrad 5d übergeben. Dort werden diese Gruppen in umlaufenden Beschichtungsstationen mit einer Siliziumdioxid-Plasmabeschichtung versehen. Nach Abschluss des Beschichtungsprozesses werden die nunmehr beschichteten Behältekörper von dem Beschichtungsrad 5d durch eine zweite Gruppierstation 5e übernommen und in einem zweiten Wenderad 5f in Ihre ursprüngliche Positionierung mit nach oben ausgerichteter Handhabungsöffnung gewendet. In nicht dargestellter Weise werden die beschichteten Behälterkörper anschließend weiterverarbeitet, befüllt und/oder palettiert.

Erfindungsgemäß ist vorgesehen, dass die Transportvorrichtung 4 eine Anzahl von in diesem Ausführungsbeispiel drei Handhabungseinheiten 4a, 4b, 4c aufweist. Diese sind in einem gemeinsamen Gehäuse 4d angeordnet. Im Bereich der ersten Handhabungseinheit ist zusätzlich eine Bodenkühlvorrichtung 6 ausgebildet.

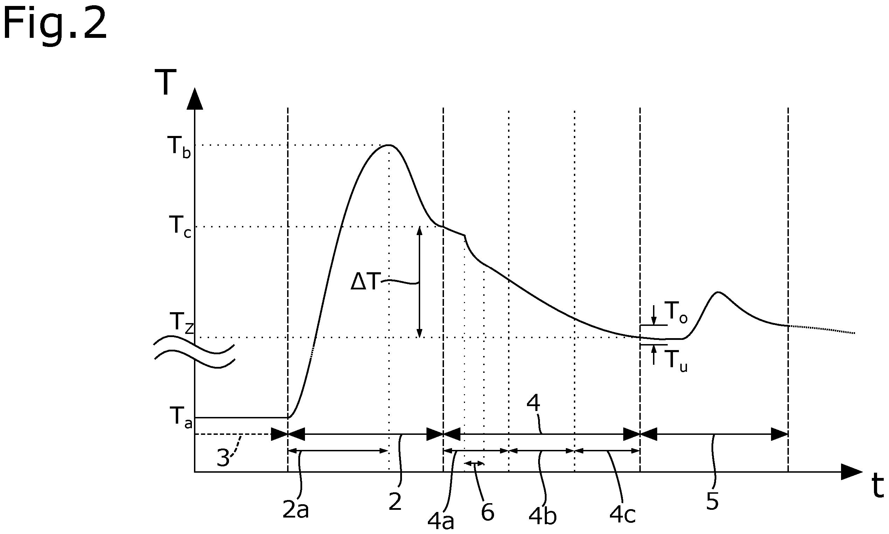

Die Fig. 2 zeigt den beispielhaften Temperaturverlauf T eines Vorformlings bzw. Behälterkörpers im Rahmen des erfindungsgemäßen Verfahrens bzw. beim Durchlauf durch die erfindungsgemäße Vorrichtung 1 über der Zeit t. Dabei sind auf der Zeitachse t die entsprechenden Stationen - Vorformlingzuführung 3, Umformmaschine 2 (mit Heiztunnel 2a), Transportvorrichtung 4 (mit Handhabungseinheiten 4a, 4b, 4c und Kühleinrichtung 6) und die Weiterverarbeitungsanlage 5 - markiert.

Zunächst weist der Vorformling eine Anfangstemperatur Tₐ auf, welche in etwa der Umgebungstemperatur - ca. 20 °C bis 30 °C entspricht. Innerhalb der Umformmaschine 2 wird dieser Vorformling in dem Heiztunnel 2a auf eine Umformtemperatur T_{b} zwischen ca. 160 °C und 180 °C erwärmt. Während des Umformprozesses sinkt die Temperatur des nun umgeformten Behälterkörpers auf die Ausgabetemperatur T_{c}. Mit dieser wird der Behälterkörpers an die Transportvorrichtung 4 übergeben.

Während des Durchlaufs der ersten, zweiten und dritten Handhabungseinheit 4a, 4b, 4c erfährt der Behälterkörper einen Temperaturabfall ΔT. Dieser ist im Wesentlichen geprägt durch einen exponentiellen Temperaturabfall überlagert von einer zusätzlichen plötzlichen Abkühlung infolge der Kühleinrichtung 6 im Bereich des ersten Transportsterns. Bei einer Zieltemperatur Tz, welche innerhalb eines optimalen Temperaturzielfensters Tᵤ bis Tₒ liegt, wird der Behälterkörper an die Weiterverarbeitungsanlage 5, nämlich eine Plasmabeschichtungsanlage übergeben. Es ist dabei angedeutet, dass der Behälterkörper darin eine zusätzliche Erwärmung erfährt.

### Bezugszeichenliste

Vorrichtung 1
Umformmaschine 2
Heiztunnel 2a
Heizelemente 2b
Blasrad 2c
Einhausung 2e
Ausgabebereich 2d
Vorformlingzuführung 3
Transportvorrichtung 4
Handhabungseinheiten 4a, 4b, 4c
Gehäuse 4d
Weiterverarbeitungsanlage 5
Eingabebereich 5a
Wenderad 5b, 5f
Gruppierstation 5c, 5e
Beschichtungsrad 5d
Bodenkühlvorrichtung 6

## Patentansprüche

1. Vorrichtung (1) zur Herstellung eines Behälterkörpers aus einem Vorformling, welcher einen durch eine Wandung umschlossenen und über eine Handhabungsöffnung zugänglichen Innenraum aufweist,
mit einer Umformmaschine (2), welche dazu eingerichtet ist den Vorformling zu erwärmen und bei einer vorbestimmten Umformtemperatur (T_{b}), vorzugsweise von zumindest 120 °C, insbesondere zwischen 160 °C und 180 °C, zu einem Behälterkörper umzuformen und einen Ausgabebereich (2d) für den umgeformten Behälterkörper aufweist,
wobei der Ausgabebereich (2d) unmittelbar an eine Transportvorrichtung (4) angeschlossen ist, welche zur Übernahme des Behälterkörpers und dessen Weitertransport eingerichtet ist,
und wobei die Transportvorrichtung (4) unmittelbar an einen Eingabebereich (5a) einer Weiterverarbeitungsanlage (5) angeschlossen ist,
**dadurch gekennzeichnet, dass** die Transportvorrichtung (4) eine Anzahl zwischen zwei und acht von mechanischen Handhabungseinheiteneinheiten (4a, 4b, 4c), insbesondere Transportsternen aufweist.

2. Vorrichtung (1) nach Anspruch 1, **dadurch gekennzeichnet, dass** die Weiterverarbeitungsanlage (5) eine Beschichtungsanlage, insbesondere eine Plasmabeschichtungsanlage ist.

3. Vorrichtung (1) nach Anspruch 1, **dadurch gekennzeichnet, dass** die Weiterverarbeitungsanlage (5) eine Füllvorrichtung ist.

4. Vorrichtung (1) nach Anspruch 1, **dadurch gekennzeichnet, dass** die Weiterverarbeitungsanlage (5) eine Trimmeinheit ist.

5. Vorrichtung (1) nach einem der vorangegangenen Ansprüche, **dadurch gekennzeichnet, dass** die Umformmaschine (2) eine Streckblasmaschine ist.

6. Vorrichtung (1) nach einem der vorangegangenen Ansprüche, **dadurch gekennzeichnet, dass** im Bereich der Transportvorrichtung (4) keine auf die Behälterkörper wirkende Heizvorrichtung ausgebildet ist.

7. Vorrichtung (1) nach einem der vorangegangenen Ansprüche, **dadurch gekennzeichnet, dass** die Transportvorrichtung (4) eine aktive Kühlvorrichtung (6), insbesondere zur Bodenkühlung aufweist.

8. Verfahren zur Herstellung eines Behälterkörpers aus einem Vorformling, welcher einen durch eine Wandung umschlossenen und über eine Handhabungsöffnung zugänglichen Innenraum aufweist, insbesondere in einer Vorrichtung (1) nach einem der vorangegangenen Ansprüche,
wobei der Vorformling in einer Umformmaschine (2), insbesondere Streckblasmaschine, erwärmt und bei einer vorbestimmten Umformtemperatur (T_{b}) von bevorzugt zumindest 120 °C, insbesondere zwischen 160 °C und 180 °C, zu einem Behälterkörper umgeformt wird,
wobei der Behälterkörper bei einer Ausgabetemperatur (T_{c}) zwischen 80 °C und 120 °C aus einem Ausgabebereich (2d) der Umformmaschine (2) übergeben wird,
**dadurch gekennzeichnet, dass** der Behälterkörper von einer Reihe zwischen zwei und acht mechanischen Handhabungseinheiten (4a, 4b, 4c), insbesondere Transportstern, übernommen und unmittelbar an eine Weiterverarbeitungsanlage (5) mit einer Zieltemperatur (Tz) übergeben wird, welche geringer ist als die Ausgabetemperatur (T_{c}).

9. Verfahren nach dem vorangegangenen Anspruch, **dadurch gekennzeichnet, dass** die Zieltemperatur (Tz) weniger als 90 °C beträgt.

10. Verfahren nach dem vorangegangenen Anspruch, dass die Zieltemperatur (Tz) weniger als 60 °C beträgt.

11. Verfahren nach einem der vorangegangenen Ansprüche, **dadurch gekennzeichnet, dass** die Zieltemperatur (Tz) zumindest 20 K, vorzugsweise zumindest 40 K niedriger ist als die Ausgabetemperatur (T_{c}).

12. Verfahren zum Auslegen einer Vorrichtung (1) zur Herstellung eines Behälterkörpers aus einem Vorformling, insbesondere nach einem der Ansprüche 1 bis 7,
mit einer Umformmaschine (2), insbesondere Streckblasmaschine, welche dazu eingerichtet ist den Vorformling zu erwärmen und bei einer vorbestimmten Umformtemperatur (T_{b}) von bevorzugt zumindest 120 °C, insbesondere zwischen 160 °C und 180 °C, zu einem Behälterkörper umzuformen und einen Ausgabebereich (2d) für den umgeformten Behälterkörper mit einer Ausgabetemperatur (T_{c}) aufweist,
wobei der Ausgabebereich (2d) unmittelbar an eine Transportvorrichtung (4) angeschlossen ist, welche zur Übernahme des Behälterkörpers und dessen Weitertransport eingerichtet ist,
und wobei die Transportvorrichtung (4) unmittelbar an einen Eingabebereich (5a) einer Weiterverarbeitungsanlage (5) angeschlossen ist,
**dadurch gekennzeichnet, dass** die Transportvorrichtung (4) eine Anzahl von mechanischen Handhabungseinheiteneinheiten (4a, 4b, 4c), insbesondere Transportsternen, aufweist und dass die Anzahl anhand der Differenz zwischen der Ausgabetemperatur (T_{c}) und einer vorgesehenen Zieltemperatur (Tz) an der Weiterverarbeitungsanlage (5) bestimmt wird.

13. Verfahren nach dem vorangegangenen Anspruch, **dadurch gekennzeichnet, dass** die Anzahl der Handhabungseinheiten (4a, 4b, 4c) anhand eines exponentiellen Temperaturverlustes modelliert wird.

14. Verfahren nach einem der vorangegangenen Ansprüche, **dadurch gekennzeichnet, dass** die Anzahl der Handhabungseinheiten (4a, 4b, 4c) anhand eines konstanten Temperaturverlustes pro Handhabungseinheit (4a, 4b, 4c) abgeschätzt wird.

15. Verfahren nach dem vorangegangenen Anspruch, **dadurch gekennzeichnet, dass** der konstante Temperaturverlust pro Handhabungseinheit (4a, 4b, 4c) zwischen 2 K und 5 K beträgt.
